# EUROPEAN PATENT APPLICATION

(11) **EP 4 772 966 A1**
(43) Date of publication of application: **08.07.2026**
(21) Application number: 25194489.8
(22) Date of filing: 07.08.2025
(51) Int. Cl.: G06F 1/30, G06F 1/3206, G06F 1/3225, G06F 11/14, G06F 11/30, G06F 3/06, G06F 1/3234

(54) **ELECTRONIC DEVICE INCLUDING SYSTEM POWER LOSS PROTECTION UNIT AND OPERATING METHOD THEREOF**

(30) Priority: 07.01.2025 KR 20250002028; 04.08.2025 US 202519289798
(71) Applicant: SAMSUNG ELECTRONICS CO., LTD., Yeongtong-gu Suwon-si, Gyeonggi-do 16677 (KR)
(72) Inventor: LIM, Jaigyun, 16677 Suwon-si, Gyeonggi-do (KR); KANG, Jeong Uk, 16677 Suwon-si, Gyeonggi-do (KR)
(74) Representative: Kuhnen & Wacker Patent- und Rechtsanwaltsbüro PartG mbB

(57) **Abstract**

Disclosed is a storage system, which includes a random access memory, a system power loss protection unit, a plurality of storage devices, and a processing unit that controls the random access memory, the system power loss protection unit, and the plurality of storage devices, and each of the plurality of storage devices assigns a persistent memory region (PMR) based on a capacity of the system power loss protection unit.

## Description

### CROSS-REFERENCE TO RELATED APPLICATIONS

This application claims priority under 35 U.S.C. § 119 to Korean Patent Application No. 10-2025-0002028 filed on January 07, 2025, in the Korean Intellectual Property Office, the disclosures of which are incorporated by reference herein in their entireties.

### BACKGROUND

Embodiments of the present disclosure described herein relate to an electronic device including a system power loss protection unit, and more particularly, relate to an electronic device having improved reliability and a method of operating the same.

A storage device refers to a device, which stores data under control of a host device, such as a computer, a smartphone, a smart pad, or the like. The storage device includes a memory controller including a volatile memory that loses stored data when power is cut off, such as SRAM and DRAM, and a nonvolatile memory device that retains stored data even when power is cut off, such as a flash memory device, a PRAM, an MRAM, an RRAM, and an FRAM.

When a power loss occurs in the storage device, data or metadata stored in a volatile memory (or a buffer memory) of the memory controller included in the storage device may be flushed to a nonvolatile memory device included in the storage device. To perform the flush operation, auxiliary power may be used in the storage device. However, due to the increased manufacturing process and design complexity of the storage device, the power that may be provided by the auxiliary power may be limited. In this case, there is an issue that the reliability of the storage device is reduced since data or metadata stored in the volatile memory (or, the buffer memory) is not completely flushed to the nonvolatile memory device.

### SUMMARY

Embodiments of the present disclosure provide an electronic device including a system power loss protection (PLP) unit and a plurality of storage devices, and capable of assigning an increased persistent memory region (PMR) to the plurality of storage devices.

According to an embodiment of the present disclosure, a storage system includes a random access memory, a system power loss protection unit, a plurality of storage devices, and a processing unit that controls the random access memory, the system power loss protection unit, and the plurality of storage devices, and each of the plurality of storage devices assigns a persistent memory region (PMR) based on a capacity of the system power loss protection unit.

According to an embodiment of the present disclosure, a method of operating a storage system including a system power loss protection unit includes monitoring a capacity of the system power loss protection unit, transferring the monitored capacity to each of a plurality of storage devices, and assigning a persistent memory region to each of the plurality of storage devices based on the received capacity.

According to an embodiment of the present disclosure, a storage system includes a system power loss protection unit, a plurality of storage devices, and a processing unit that controls the system power loss protection unit and the plurality of storage devices, and the processing unit monitors a capacity of the system power loss protection unit and transfers the monitored capacity to each of the plurality of storage devices, and each of the plurality of storage devices that assigns a persistent memory region based on the capacity and data dump performance of each of the plurality of storage devices.

### BRIEF DESCRIPTION OF THE FIGURES

The above and other objects and features of the present disclosure will become apparent by describing in detail embodiments thereof with reference to the accompanying drawings.
FIG. 1 is a block diagram illustrating an electronic device, according to an embodiment of the present disclosure.
FIG. 2 is a block diagram illustrating a storage device, according to an embodiment of the present disclosure.
FIG. 3 is a block diagram illustrating a memory controller, according to an embodiment of the present disclosure.
FIG. 4 is a block diagram illustrating a nonvolatile memory device, according to an embodiment of the present disclosure.
FIG. 5 is a flowchart, by way of example, illustrating an operation of assigning a persistent memory region, according to an embodiment of the present disclosure.
FIG. 6 is a flowchart, by way of example, illustrating an operation of reassigning a persistent memory region, according to an embodiment of the present disclosure.
FIG. 7 is a block diagram illustrating how an electronic device, according to an embodiment of the present disclosure writes data into a plurality of storage devices.
FIG. 8 is a block diagram illustrating how an electronic device according to an embodiment of the present disclosure completes data writing into a plurality of storage devices.
FIG. 9 is a flowchart, by way of example, illustrating how an electronic device according to an embodiment of the present disclosure writes data into a plurality of storage devices.
FIG. 10 is a flowchart, by way of example, illustrating how an electronic device according to an embodiment of the present disclosure completes data writing into a plurality of storage devices.
FIG. 11 is a block diagram illustrating a memory system, according to an embodiment of the present disclosure.
FIG. 12 is a diagram illustrating a system to which a storage device, according to an embodiment of the present disclosure, is applied.

### DETAILED DESCRIPTION

Hereinafter, embodiments of the present disclosure may be described in detail and clearly to such an extent that an ordinary one in the art easily implements the present disclosure.

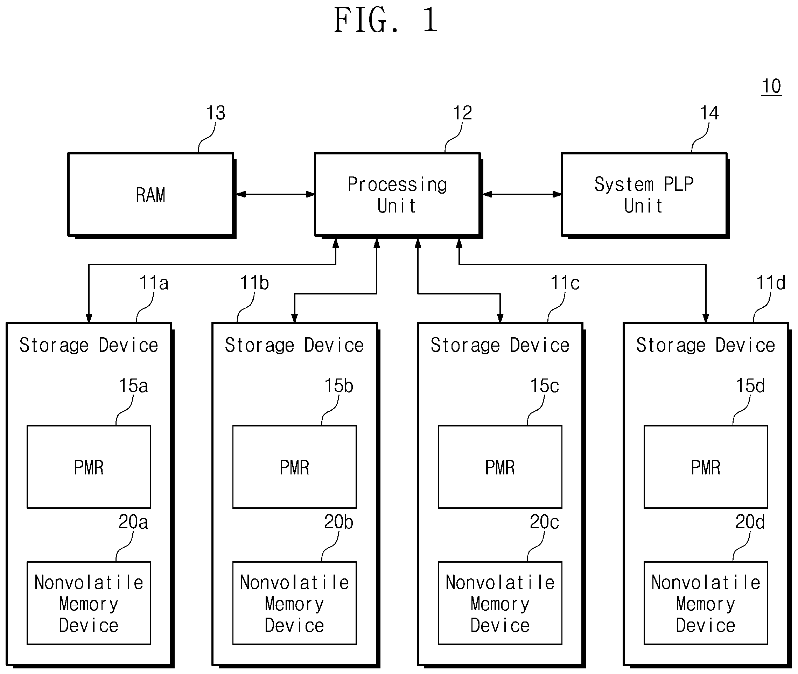

FIG. 1 is a block diagram illustrating an electronic device, according to an embodiment of the present disclosure. Referring to FIG. 1, an electronic device 10 may include a plurality of storage devices 11a, 11b, 11c, and 11d, a processing unit 12, a random access memory (RAM) 13, and a system power loss protection unit 14.

Each of the plurality of storage devices 11a, 11b, 11c, and 11d may include a nonvolatile memory device 20a, 20b, 20c, or 20d that maintains stored data even when power is cut off. For example, each of the plurality of storage devices 11a, 11b, 11c, and 11d may be a solid state drive (SSD). Each of the plurality of storage devices 11a, 11b, 11c, and 11d may include a persistent memory region (PMR) 15a, 15b, 15c, or 15d.

The persistent memory region 15a, 15b, 15c, or 15d may be a region assigned to volatile memory (e.g., a DRAM, a buffer memory, etc.) included in each of the plurality of storage devices 11a, 11b, 11c, and 11d. The persistent memory region 15a, 15b, 15c, or 15d may be assigned based on a system power loss unit. For example, a size of the persistent memory region 15a, 15b, 15c, or 15d may be determined based on a capacity of the system power loss protection unit 14.

In the persistent memory region 15a, 15b, 15c, or 15d, parity data, metadata, transaction logs, wear leveling information, garbage collection information, etc. of each of the plurality of storage devices 11a, 11b, 11c, and 11d may be stored. When a power loss occurs in the plurality of storage devices 11a, 11b, 11c, and 11d, data stored in the respective persistent memory region 15a, 15b, 15c, or 15d of the plurality of storage devices 11a, 11b, 11c, and 11d may be flushed to the respective nonvolatile memory device 20a, 20b, 20c, or 20d of the plurality of storage devices 11a, 11b, 11c, and 11d.

When a power loss occurs in the plurality of storage devices 11a, 11b, 11c, and 11d, each of the plurality of storage devices 11a, 11b, 11c, and 11d may be provided with auxiliary power and may perform a flush operation based on the provided auxiliary power. For example, when the power loss occurs in the plurality of storage devices, power stored in internal capacitors included in each of the plurality of storage devices 11a, 11b, 11c, and 11d may be used as auxiliary power. As another example, when the power loss occurs in the plurality of storage devices, power stored in the system power loss protection unit 14 may be used as auxiliary power.

The processing unit 12 may include a CPU (Central Processing Unit) or an AP (Application Processor). The processing unit 12 may execute an operating system to drive the electronic device 10. The processing unit 12 may execute various applications.

The random access memory 13 may be used for various purposes such as a system memory of the electronic device 10, an operating memory of the processing unit 12, a buffer memory of the processing unit 12, and a cache memory of the processing unit 12.

The system power loss protection unit 14 may include at least one power loss protection capacitor. The system power loss protection unit 14 may store power (i.e., auxiliary power) for flushing data stored in the persistent memory region 15a, 15b, 15c, or 15d of the plurality of storage devices 11a, 11b, 11c, and 11d to the nonvolatile memory device 20a, 20b, 20c, or 20d when a power loss occurs in the plurality of storage devices 11a, 11b, 11c, and 11d.

A capacity of the system power loss protection unit 14 may correspond to a capacitance of at least one power loss protection capacitor included in the system power loss protection unit 14. For example, as the capacitance of at least one power loss protection capacitor included in the system power loss protection unit 14 increases, the capacity of the system power loss protection unit 14 may increase.

When the capacity of the system power loss protection unit 14 is large (i.e., high capacity), the amount of auxiliary power provided to the plurality of storage devices 11a, 11b, 11c, and 11d may be large. In this case, the plurality of storage devices 11a, 11b, 11c, and 11d may have a longer time to perform the flush operation. That is, since the plurality of storage devices 11a, 11b, 11c, and 11d are provided with a large amount of auxiliary power, sufficient time may be guaranteed for the plurality of storage devices 11a, 11b, 11c, and 11d to flush data stored in the persistent memory region 15a, 15b, 15c, or 15d to the nonvolatile memory device 20a, 20b, 20c, or 20d.

Therefore, as the capacity of the system power loss protection unit 14 increases, each of the plurality of storage devices 11a, 11b, 11c, and 11d may assign a large size of the persistent memory region 15a, 15b, 15c, or 15d. That is, the size of the persistent memory region 15a, 15b, 15c, or 15d assigned by each of the plurality of storage devices 11a, 11b, 11c, and 11d may correspond to the size of data that can be flushed from the persistent memory region 15a, 15b, 15c, or 15d to the nonvolatile memory device 20a, 20b, 20c, or 20d based on the power corresponding to the capacity of the system power loss protection unit 14 when a power loss occurs in the electronic device 10.

Due to the increase in the manufacturing process and design complexity of the storage device, the power that may be stored in the internal capacitors included in the plurality of storage devices 11a, 11b, 11c, and 11d may be limited. In contrast, at least one power loss protection capacitor included in the system power loss protection unit 14 may not be formed inside each of the plurality of storage devices 11a, 11b, 11c, and 11d. That is, the power loss protection capacitor may be formed with relatively low cost and high capacity, regardless of the manufacturing process and design complexity of the storage device. Therefore, the power that may be stored in at least one power loss protection capacitor included in the system power loss protection unit 14 may be greater than the power that may be stored in the internal capacitors included in the plurality of storage devices 11a, 11b, 11c, and 11d.

For example, the capacitance of the power loss protection capacitor may be configured to be greater (i.e., to have a high capacity) than the capacitance of the internal capacitor. In this case, based on the system power loss protection unit 14 implemented with a high-capacity power loss protection capacitor, a large size of the persistent memory region 15a, 15b, 15c, or 15d may be assigned in each of the plurality of storage devices 11a, 11b, 11c, and 11d.

As another example, at least some of the plurality of storage devices 11a, 11b, 11c, and 11d included in the electronic device 10 may be capless storage devices configured so as not to have an internal capacitor. Since the capless storage device may not receive auxiliary power from the internal capacitor when a power loss occurs, it may not be able to assign the persistent memory region 15a, 15b, 15c, or 15d in the storage device. In this case, based on the system power loss protection unit 14 implemented as the power loss protection capacitor, each of the capless storage devices among the plurality of storage devices 11a, 11b, 11c, and 11d may assign the persistent memory region 15a, 15b, 15c, or 15d.

In the electronic device 10 according to the embodiment of the present disclosure, the processing unit 12 may allow each of the plurality of storage devices 11a, 11b, 11c, and 11d to assign the persistent memory region 15a, 15b, 15c, or 15d by controlling the plurality of storage devices 11a, 11b, 11c, and 11d. For example, the processing unit 12 may monitor the capacity of the system power loss unit, and may transfer the capacity of the monitored system power loss unit to each of the plurality of storage devices 11a, 11b, 11c, and 11d.

Each of the plurality of storage devices 11a, 11b, 11c, and 11d may assign the persistent memory region 15a, 15b, 15c, or 15d based on the capacity of the received system power loss unit. For example, each of the plurality of storage devices 11a, 11b, 11c, and 11d may assign the persistent memory region 15a, 15b, 15c, or 15d based on the capacity of the received system power loss unit and the data dump performance.

For example, in each of the plurality of storage devices 11a, 11b, 11c, and 11d, when a power loss occurs, the performance (i.e., the data dump performance) corresponding to the speed of storing data stored in the persistent memory region 15a, 15b, 15c, or 15d into the nonvolatile memory device 20a, 20b, 20c, or 20d (i.e., the speed of the flush operation) may be the same or different from each other. In addition, each of the plurality of storage devices 11a, 11b, 11c, and 11d may calculate a guaranteed time to perform a flush operation based on the capacity of the received system power loss unit.

Each of the plurality of storage devices 11a, 11b, 11c, and 11d may assign the persistent memory region 15a, 15b, 15c, or 15d based on the guaranteed time to perform the flush operation and the speed of the flush operation. In this case, the size of the assigned persistent memory region 15a, 15b, 15c, or 15d may be proportional to the guaranteed time to perform the flush operation and the speed of the flush operation of each of the plurality of storage devices 11a, 11b, 11c, and 11d.

In the electronic device 10 according to the embodiment of the present disclosure, the persistent memory region 15a, 15b, 15c, or 15d assigned to each of the plurality of storage devices 11a, 11b, 11c, and 11d may be variable. For example, the capacity of the system power loss protection unit 14 may be variable due to a defect, failure, replacement, change, or the like of at least one power loss protection capacitor included in the system power loss protection unit 14. When the capacity of the system power loss protection unit 14 is variable, the persistent memory region 15a, 15b, 15c, or 15d may be variably assigned in each of the plurality of storage devices 11a, 11b, 11c, and 11d.

For example, in the electronic device 10 according to an embodiment of the present disclosure, after the persistent memory region 15a, 15b, 15c, or 15d is assigned in each of the plurality of storage devices 11a, 11b, 11c, and 11d based on the system power loss protection unit 14, the capacity of the system power loss protection unit 14 may be changed. In detail, when the capacity of the system power loss protection unit 14 is variable, the processing unit 12 may detect that the capacity of the system power loss protection unit 14 is changed, and may transfer the changed capacity of the system power loss protection unit 14 to each of the plurality of storage devices 11a, 11b, 11c, and 11d.

Each of the plurality of storage devices 11a, 11b, 11c, and 11d may reassign the persistent memory region 15a, 15b, 15c, or 15d based on the changed capacity of the system power loss unit. For example, each of the plurality of storage devices 11a, 11b, 11c, and 11d may reassign the persistent memory region 15a, 15b, 15c, or 15d based on the changed capacity of the system power loss unit and the data dump performance. That is, even if the data dump performance does not change in each of the plurality of storage devices 11a, 11b, 11c, and 11d, since the capacity of the system power loss unit is changed, each of the plurality of storage devices 11a, 11b, 11c, and 11d may reassign the persistent memory region 15a, 15b, 15c, or 15d correspondingly.

When the electronic device 10 writes data into the plurality of storage devices 11a, 11b, 11c, and 11d, to ensure the reliability of the data, parity data may be stored together with the data. For example, the electronic device 10 may store the parity data together with the data in the nonvolatile memory device 20a, 20b, 20c, or 20d of any one of the plurality of storage devices 11a, 11b, 11c, and 11d.

In this case, while the electronic device 10 performs a data write operation, an excessive overwrite operation on the parity data may be performed. In detail, the nonvolatile memory device 20a, 20b, 20c, or 20d may have an erase-before-write characteristic in which an erase operation should be performed between writes. Therefore, while the electronic device 10 performs the data write operation, the overwrite operation on the parity data may be performed every time the parity data is changed. In this case, resource overload may occur on the random access memory 13 used as the operating memory of the processing unit 12, to calculate the parity data and to store the parity data.

In the electronic device 10 according to the embodiment of the present disclosure, parity data may be stored in the persistent memory region 15a, 15b, 15c, or 15d assigned in the plurality of storage devices 11a, 11b, 11c, and 11d. In this case, since the persistent memory region 15a, 15b, 15c, or 15d is a region assigned to each volatile memory of the plurality of storage devices 11a, 11b, 11c, and 11d, the overwrite operation for the parity data may be unnecessary while the electronic device 10 performs a data write operation. Therefore, while the electronic device 10 performs a data write operation, resource overload of the random access memory 13 used as the operating memory of the processing unit 12 may be resolved. That is, a reduced write amplification factor (WAF) may be provided with respect to the plurality of storage devices 11a, 11b, 11c, and 11d.

Afterwards, when the data write operation of the electronic device 10 is completed, since no further changes with respect to the parity data occur, the parity data may be copied from the persistent memory region 15a, 15b, 15c, or 15d to the nonvolatile memory device 20a, 20b, 20c, or 20d.

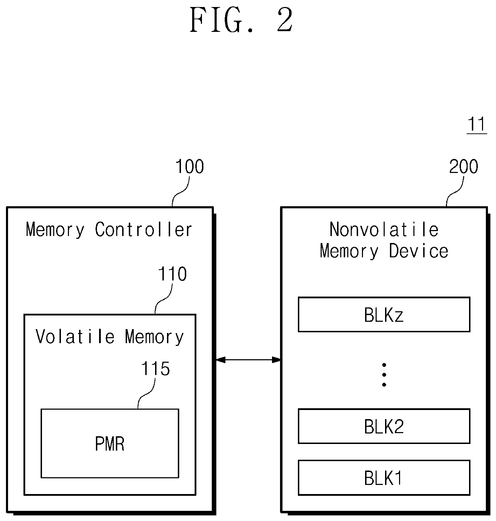

FIG. 2 is a block diagram illustrating a storage device, according to an embodiment of the present disclosure. Referring to FIGS. 1 and 2, a storage device 11 may correspond to one (or each) of the plurality of storage devices 11a, 11b, 11c, and 11d of FIG. 1. The storage device 11 may include a nonvolatile memory device 200 and a memory controller 100.

For example, the nonvolatile memory device 200 may include at least one of various nonvolatile memory devices such as a flash memory device, a phase change memory device, a ferroelectric memory device, a magnetic memory device, and a resistive memory device.

The memory controller 100 may receive various requests from the processing unit 12 (e.g., an external host device) to write data into the nonvolatile memory device 200 or to read data from the nonvolatile memory device 200.

The memory controller 100 may transfer commands and addresses to the nonvolatile memory device 200. The memory controller 100 may exchange data with the nonvolatile memory device 200. In addition, the memory controller 100 may exchange control signals with the nonvolatile memory device 200.

The nonvolatile memory device 200 may include a plurality of memory blocks BLK1 to BLKz. For example, each of the plurality of memory blocks BLK1 to BLKz may be a unit of an erase operation. The memory cells belonging to each of the memory blocks BLK1 to BLKz may be erased at the same time.

The memory controller 100 may include a volatile memory 110. The volatile memory 110 may be configured and operate as a main memory, a cache memory, an operating memory, or a buffer memory in the memory controller 100. The volatile memory 110 may include a random access memory. For example, the volatile memory 110 may include at least one of a dynamic random access memory, a phase change random access memory, a ferroelectric random access memory, a magnetic random access memory, and a resistive random access memory.

The volatile memory 110 may include a persistent memory region 115. For example, the persistent memory region 115 of FIG. 2 may correspond to any one of the persistent memory regions 15a, 15b, 15c, and 15d of FIG. 1. As described above with reference to FIG. 1, the memory controller 100 may assign the persistent memory region 115 in the volatile memory 110 based on the capacity of the system power loss protection unit 14 received from the processing unit 12. In addition, as described above with reference to FIG. 1, the memory controller 100 may reassign the persistent memory region 115 in the volatile memory 110 based on the changed capacity of the system power loss protection unit 14 received from the processing unit 12. That is, the memory controller 100 may variably assign the persistent memory region 115 in the volatile memory 110 based on the variable capacity of the system power loss protection unit 14.

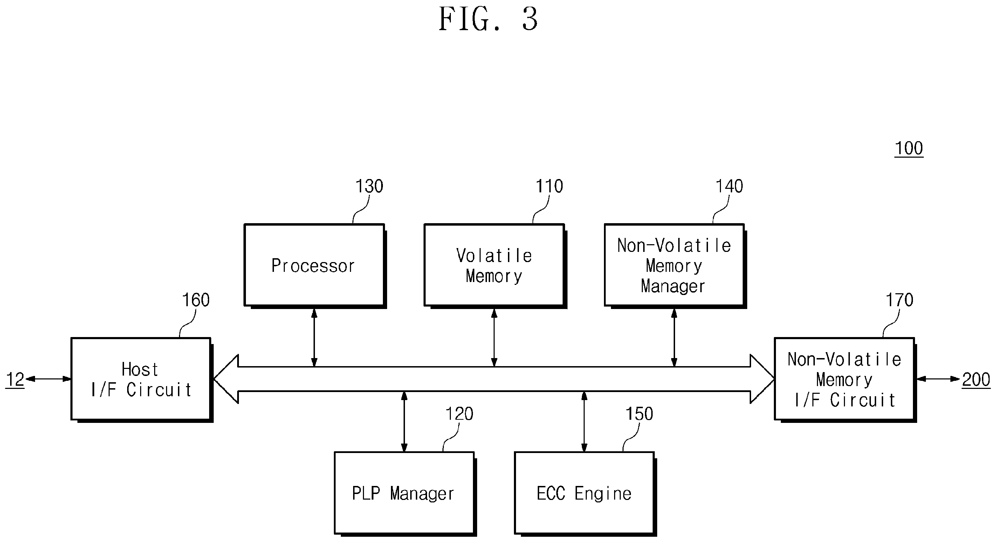

FIG. 3 is a block diagram illustrating a memory controller, according to an embodiment of the present disclosure. Referring to FIGS. 1, 2, and 3, the memory controller 100 may include the volatile memory 110, a power loss protection manager 120, a processor 130, a nonvolatile memory manager 140, an error correction code (ECC) engine 150, a host interface circuit 160, and a nonvolatile memory interface circuit 170.

The volatile memory may correspond to the volatile memory 110 of FIG. 2. Therefore, in the following description referring to FIG. 3, an additional description of the volatile memory 110 will be omitted to avoid redundancy.

The power loss protection manager 120 may control an operation of assigning or reassigning the persistent memory region 115 in the volatile memory 110 based on the capacity of the system power loss protection unit 14 received from the processing unit 12 or the changed capacity of the system power loss protection unit 14 received from the processing unit 12. For example, the volatile memory 110 may assign the persistent memory region 115 corresponding to the capacity of the system power loss protection unit 14 in the volatile memory 110 under the control of the power loss protection manager 120.

The processor 130 may control overall operations of the memory controller 100. For example, the processor 130 may drive an operating system or firmware for driving the memory controller 100. The processor 130 may read interpreted requests stored in the volatile memory 110 and may generate commands and addresses for controlling the nonvolatile memory device 200. The processor 130 may transfer the generated commands and the generated addresses to the nonvolatile memory manager 140.

The processor 130 may store various metadata for managing the storage device 11 in the volatile memory 110. The processor 130 may control the nonvolatile memory interface circuit 170 to transfer data stored in the volatile memory 110 to the nonvolatile memory device 200.

The processor 130 may control the host interface circuit 160 to transfer data stored in the volatile memory 110 to the processing unit 12. The processor 130 may control the nonvolatile memory interface circuit 170 to store data received from the nonvolatile memory device 200 in the volatile memory 110. The processor 130 may control the host interface circuit 160 to store data received from the processing unit 12 in the volatile memory 110.

The nonvolatile memory manager 140 may perform various operations related to the nonvolatile memory, such as an address mapping operation, a wear leveling operation, and a garbage collection operation. The address mapping operation may be an operation to convert a logical address received from the processing unit 12 into a physical address used to store data in the nonvolatile memory device 200. The wear leveling operation may be an operation to prevent excessive deterioration of specific blocks by uniformly using the plurality of memory blocks BLK1 to BLKz of the nonvolatile memory device 200. For example, the wear leveling operation may be implemented using firmware technology to balance the erase counts of the plurality of memory blocks BLK1 to BLKz. The garbage collection operation may be an operation to secure available capacity in the nonvolatile memory device 200 by erasing data of the existing memory blocks after copying valid data from the existing memory blocks to new memory blocks.

The error correction code engine 150 may perform error correction encoding using an error correction code on data transferred to the nonvolatile memory device 200. The error correction code engine 150 may perform error correction decoding using an error correction code on data received from the nonvolatile memory device 200.

In detail, the error correction code engine 150 may perform error detection and correction operations on read data read from the nonvolatile memory device 200. For example, the error correction code engine 150 may generate parity data (e.g., parity bits) for write data to be written in the nonvolatile memory device 200, and the generated parity data may be stored in the volatile memory 110 or the nonvolatile memory device 200 together with the write data.

During an operation of reading data from the nonvolatile memory device 200, the error correction code engine 150 may correct an error in the read data using the parity data read from the nonvolatile memory device 200, and may output the read data after the error correction.

The host interface circuit 160 may receive various requests from the processing unit 12, and may interpret the received requests. The host interface circuit 160 may store the interpreted requests in the volatile memory 110. The host interface circuit 160 may transfer various responses to the processing unit 12.

The memory controller 100 may communicate with the processing unit 12 through the host interface circuit 160. In embodiments, the host interface circuit 160 may be implemented based on at least one of various interfaces such as SATA (Serial ATA), PCIe (Peripheral Component Interconnect Express), SAS (Serial Attached SCSI) interface, NVMe (Nonvolatile Memory express), UFS (Universal Flash Storage), etc. In addition, the host interface circuit 160 may support an NVMe standard.

The memory controller 100 may communicate with the nonvolatile memory device 200 through the nonvolatile memory interface circuit 170. In embodiments, the nonvolatile memory interface circuit 170 may be implemented based on a NAND interface. In addition, the nonvolatile memory interface circuit 170 may support the NVMe standard.

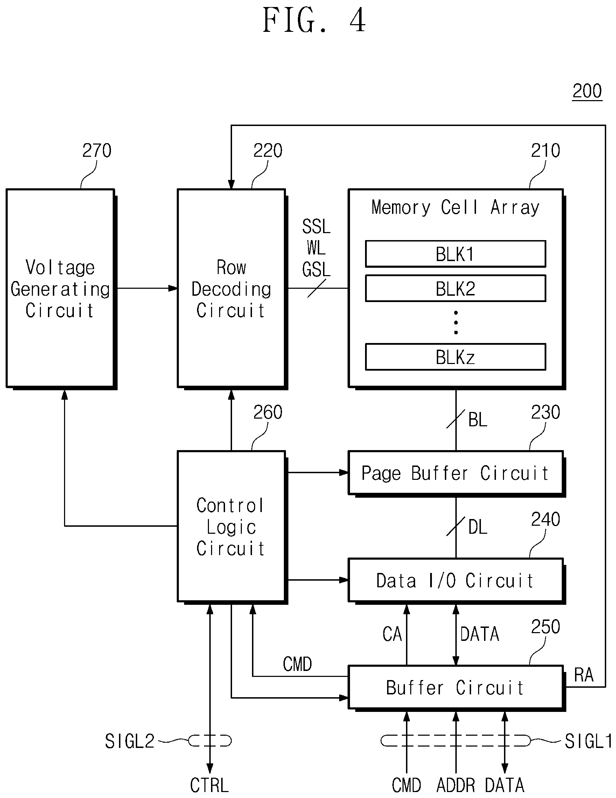

FIG. 4 is a block diagram illustrating a nonvolatile memory device, according to an embodiment of the present disclosure. Referring to FIG. 4, the nonvolatile memory device 200 may include a memory cell array 210, a row decoding circuit 220, a page buffer circuit 230, a data input/output circuit 240, a buffer circuit 250, a control logic circuit 260, and a voltage generating circuit 270. In an embodiment, the nonvolatile memory device 200 may be a NAND flash memory. However, the scope of the present disclosure is not limited thereto, and the nonvolatile memory device 200 may be one of various other nonvolatile memory devices 200.

The memory cell array 210 may include the plurality of memory blocks BLK1 to BLKz. Each of the plurality of memory blocks BLK1 to BLKz may include a plurality of cell strings. Each of the plurality of cell strings may include a plurality of cell transistors stacked in a direction perpendicular to a substrate. The plurality of cell transistors may be connected in series between bit lines BL and a common source line. The plurality of cell transistors may be connected to string selection lines SSL, word lines WL, and ground selection lines GSL, respectively.

The row decoding circuit 220 may be connected to the memory cell array 210 through the string selection lines SSL, the word lines WL, and the ground selection lines GSL. The row decoding circuit 220 may operate under the control of the control logic circuit 260. For example, the row decoding circuit 220 may decode a row address RA received from the buffer circuit 250 under the control of the control logic circuit 260, and, based on the decoding result, may control or drive the string selection lines SSL, the word lines WL, and the ground selection lines GSL, or may control the voltages applied to them.

The page buffer circuit 230 may be connected to the memory cell array 210 through the bit lines BL. The page buffer circuit 230 may be connected to the data input/output circuit 240 through a plurality of data lines DL. The page buffer circuit 230 may operate under the control of the control logic circuit 260. For example, during a program operation of the nonvolatile memory device 200, the page buffer circuit 230 may store data to be programmed into the memory cell array 210 under the control of the control logic circuit 260. During a read operation of the nonvolatile memory device 200, the page buffer circuit 230 may detect voltages of the plurality of bit lines BL and may store the detection results as read data.

The data input/output circuit 240 may be connected to the page buffer circuit 230 through the plurality of data lines DL. The data input/output circuit 240 may receive a column address CA from the buffer circuit 250. The data input/output circuit 240 may transfer data read by the page buffer circuit 230 to the buffer circuit 250 according to the column address CA. The data input/output circuit 240 may transfer data received from the buffer circuit 250 to the page buffer circuit 230 based on the column address CA.

The buffer circuit 250 may receive a command CMD and an address ADDR from an external device (e.g., a controller) through first signal lines SIGL1, and may exchange data DATA with the external device (e.g., a controller) through the first signal lines SIGL1. In an embodiment, the first signal lines SIGL1 may include data signal lines (e.g., DQ lines) and a data strobe signal line (e.g., a DQS line).

The buffer circuit 250 may operate under the control of the control logic circuit 260. For example, the control logic circuit 260 may exchange a control signal CTRL with an external device (e.g., a controller) through second signal lines SIGL2. The control logic circuit 260 may control the buffer circuit 250 to route the command CMD, the address ADDR, and the data DATA based on the control signal CTRL. The buffer circuit 250 may identify a signal received through the first signal lines SIGL1 into the command CMD or the address ADDR based on the control of the control logic circuit 260. The buffer circuit 250 may transfer the command CMD to the control logic circuit 260. The buffer circuit 250 may transfer the row address RA of the address ADDR to the row decoding circuit 220 and may transfer the column address CA of the address ADDR to the data input/output circuit 240. The buffer circuit 250 may exchange the data DATA with the data input/output circuit 240.

The control logic circuit 260 may decode the command CMD received from the buffer circuit 250 and control the nonvolatile memory device 200 or various components of the nonvolatile memory device 200 based on the decoding result.

The voltage generating circuit 270 may generate various operating voltages used in the nonvolatile memory device 200 based on the control of the control logic circuit 260. In an embodiment, the various operating voltages may include various voltages such as program voltages, pass voltages, selection read voltages, non-selection read voltages, erase voltages, and verify voltages. Hereinafter, the various voltages used to describe the embodiments of the present disclosure may be included in the operating voltages generated by the voltage generating circuit 270.

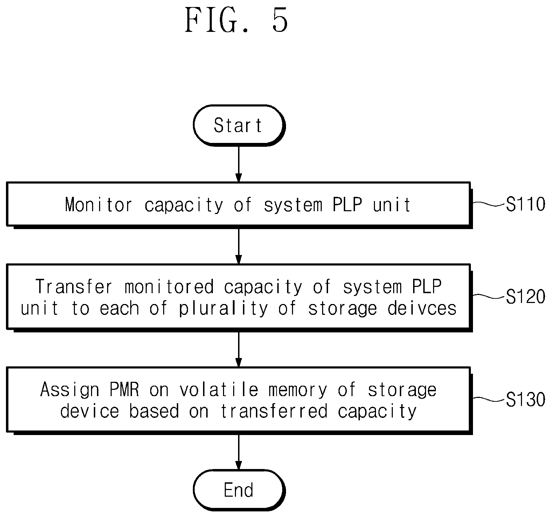

FIG. 5 is a flowchart, by way of example, illustrating an operation of assigning a persistent memory region, according to an embodiment of the present disclosure. Referring to FIG. 1 and FIG. 5, in operation S110, the electronic device 10 may monitor the capacity of the system power loss protection unit 14. For example, the processing unit 12 of the electronic device 10 may monitor the capacity of the system power loss protection unit 14 based on the capacitance of the power loss protection capacitor included in the system power loss protection unit 14.

In operation S120, the electronic device 10 may transfer the monitored capacity of the system power loss protection unit 14 to each of the plurality of storage devices 11a, 11b, 11c, and 11d. For example, the processing unit 12 of the electronic device 10 may transfer the monitored capacity of the system power loss protection unit 14 to each of the plurality of storage devices 11a, 11b, 11c, and 11d.

For example, when a power loss occurs in the electronic device 10, an equal amount of auxiliary power may be provided to each of the plurality of storage devices 11a, 11b, 11c, and 11d. In this case, the processing unit 12 may transfer a value obtained by dividing the capacity (i.e., total capacity) of the system power loss protection unit 14 by the number of the plurality of storage devices 11a, 11b, 11c, and 11d to each of the plurality of storage devices 11a, 11b, 11c, and 11d.

In operation S130, the electronic device 10 may assign a persistent memory region to the volatile memory of the storage device based on the transferred capacity. For example, each of the plurality of storage devices 11a, 11b, 11c, and 11d of the electronic device 10 may assign the persistent memory region 15a, 15b, 15c, or 15d to the volatile memory 110 based on the received capacity of the system power loss protection unit 14 and the data dump performance of each storage device.

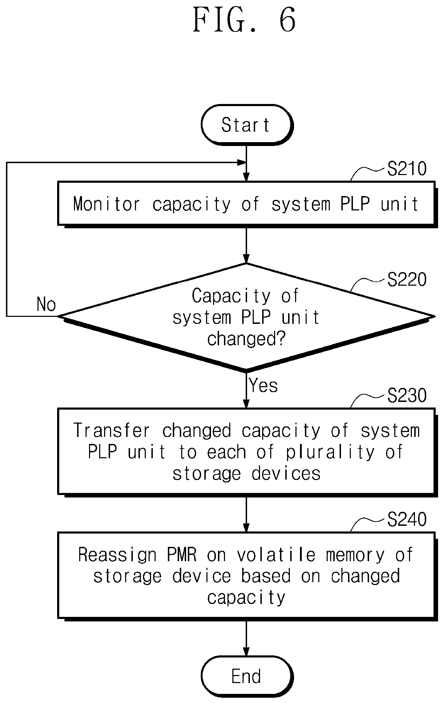

FIG. 6 is a flowchart, by way of example, illustrating an operation of reassigning a persistent memory region, according to an embodiment of the present disclosure. Referring to FIGS. 1, 5, and 6, in operation S210, the electronic device 10 may monitor the capacity of the system power loss protection unit 14. For example, the processing unit 12 of the electronic device 10 may monitor the capacity of the system power loss protection unit 14 based on the capacitance of the power loss protection capacitor included in the system power loss protection unit 14.

For example, operation S210 may be an operation in which the electronic device 10 continuously monitors the capacity of the system power loss protection unit 14 after assigning the persistent memory region 15a, 15b, 15c, or 15d to each of the plurality of storage devices 11a, 11b, 11c, and 11d through operations S110, S120, and S130 of FIG. 5.

In operation S220, the electronic device 10 may determine whether the capacity of the system power loss protection unit 14 is changed. For example, when the capacity of the system power loss protection unit 14 is variable, the processing unit 12 of the electronic device 10 may detect that the capacity of the system power loss protection unit 14 is changed. When it is detected that the capacity of the system power loss protection unit 14 is changed, the electronic device 10 may proceed to operation S230 and may perform the operation described below. When it is not detected that the capacity of the system power loss protection unit 14 is changed, the electronic device 10 may proceed to operation S210 and may repeat the operation described above.

In operation S230, the electronic device 10 may transfer the changed capacity of the system power loss protection unit 14 to each of the plurality of storage devices 11a, 11b, 11c, and 11d. For example, the processing unit 12 of the electronic device 10 may transfer the changed capacity of the system power loss protection unit 14 to each of the plurality of storage devices 11a, 11b, 11c, and 11d.

For example, similar to operation S120 of FIG. 5, when a power loss occurs in the electronic device 10, the equal amount of auxiliary power may be provided to each of the plurality of storage devices 11a, 11b, 11c, and 11d. In this case, the processing unit 12 may transfer a value obtained by dividing the changed capacity (i.e., total capacity) of the system power loss protection unit 14 by the number of the plurality of storage devices 11a, 11b, 11c, and 11d to each of the plurality of storage devices 11a, 11b, 11c, and 11d.

In operation S240, the electronic device 10 may reassign the persistent memory region in the volatile memory of the storage device based on the changed capacity. For example, each of the plurality of storage devices 11a, 11b, 11c, and 11d of the electronic device 10 may reassign the persistent memory region 15a, 15b, 15c, or 15d in the volatile memory 110 based on the changed capacity of the system power loss protection unit 14 and the data dump performance of each storage device.

According to the operation described above with reference to FIGS. 5 and 6, the electronic device 10 including the system power loss protection unit 14 may variably assign the persistent memory region 15a, 15b, 15c, or 15d in each of a plurality of storage devices 11a, 11b, 11c, and 11d depending on the variable capacity of the system power loss protection unit 14.

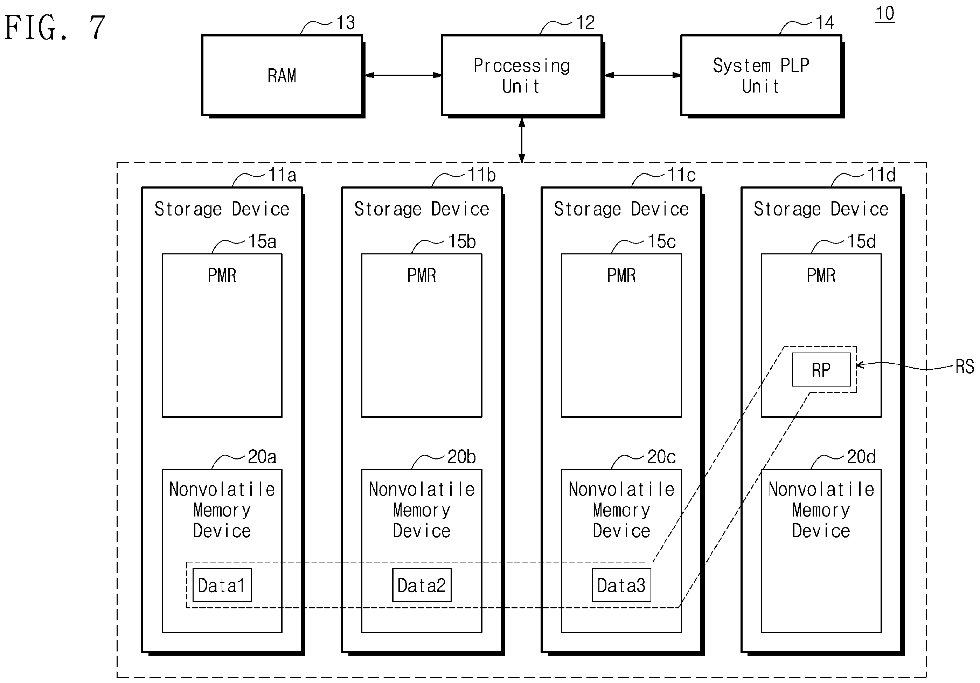

FIG. 7 is a block diagram illustrating how an electronic device, according to an embodiment of the present disclosure, writes data into a plurality of storage devices. Referring to FIGS. 1, 2, 3, and 7, a RAID (Redundant Array of Inexpensive Disks or Redundant Array of Independent Disks) is implemented in the plurality of storage devices 11a, 11b, 11c, and 11d, and data (or write data) requested from the processing unit 12 is written into the RAID implemented in the plurality of storage devices 11a, 11b, 11c, and 11d. FIG. 7 is a drawing for describing an effect that the electronic device 10 according to an embodiment of the present disclosure has when performing a RAID write operation. However, this is an example, and the scope of the present disclosure is not limited to the electronic device 10 performing the RAID write operation.

The write data requested from the processing unit 12 may be sequentially written into the plurality of storage devices 11a, 11b, 11c, and 11d. Hereinafter, it is assumed that the write data requested from the processing unit 12 includes first data Data1, second data Data2, and third data Data3, and the first data Data1, the second data Data2, and the third data Data3 are sequentially stored in the a-th nonvolatile memory device 20a of the a-th storage device 11a, the b-th nonvolatile memory device 20b of the b-th storage device 11b, and the c-th nonvolatile memory device 20c of the c-th storage device 11c, respectively. However, this is an example, and the scope of the present disclosure is not limited thereto.

For example, first, the first data Data1 may be written into the a-th nonvolatile memory device 20a of the a-th storage device 11a. The processing unit 12 or the memory controller 100 of the d-th storage device 11d may calculate the RAID parity RP based on the first data Data1 stored in the a-th nonvolatile memory device 20a of the a-th storage device 11a. The calculated RAID parity RP may be stored in the d-th persistent memory region 15d of the d-th storage device 11d.

Next, the second data Data2 may be written to the b-th nonvolatile memory device 20b of the b-th storage device 11b. The processing unit 12 or the memory controller 100 of the d-th storage device 11d may calculate the RAID parity RP based on the first data Data1 stored in the a-th nonvolatile memory device 20a of the a-th storage device 11a and the second data Data2 stored in the b-th nonvolatile memory device 20b of the b-th storage device 11b. The calculated RAID parity RP may be stored in the d-th persistent memory region 15d of the d-th storage device 11d.

Finally, the third data Data3 may be written to the c-th nonvolatile memory device 20c of the c-th storage device 11c. The processing unit 12 or the memory controller 100 of the d-th storage device 11d may calculate the RAID parity RP (i.e., the final RAID parity RP) based on the first data Data1 stored in the a-th nonvolatile memory device 20a of the a-th storage device 11a, the second data Data2 stored in the b-th nonvolatile memory device 20b of the b-th storage device 11b, and the third data Data3 stored in the c-th nonvolatile memory device 20c of the c-th storage device 11c. The calculated RAID parity RP may be stored in the d-th persistent memory region 15d of the d-th storage device 11d.

For example, the RAID parity RP may be calculated by performing an XOR operation on the existing RAID parity RP and the data. The operation of calculating RAID parity RP is described as being performed by the processing unit 12 or the memory controller 100 of the d-th storage device 11d, but this is an example, and the scope of the present disclosure is not limited thereto.

For example, although not illustrated, the electronic device 10 may include a RAID controller. The electronic device 10 may be implemented such that the operation of calculating RAID parity RP is performed by the RAID controller by performing an XOR on at least two of the existing RAID parity RP, the first data Data1, the second data Data2, and the third data Data3.

For example, the electronic device 10 may utilize resources of the persistent memory region 15a, 15b, 15c, or 15d assigned to each of the plurality of storage devices 11a, 11b, 11c, and 11d to perform a RAID calculation operation or a RAID parity RP calculation operation. For example, the resources for the persistent memory region 15a, 15b, 15c, or 15d assigned to each of the plurality of storage devices 11a, 11b, 11c, and 11d may be shared among each other within the electronic device 10.

In this case, the region in which the first data Data1 is written in the a-th nonvolatile memory device 20a, the region in which the second data Data2 is written in the b-th nonvolatile memory device 20b, the region in which the third data Data3 is written in the c-th nonvolatile memory device 20c, and the region in which the RAID parity RP is stored in the d-th persistent memory region 15d may be defined as a RAID stripe RS.

In the data write operation described with reference to FIG. 7, whenever the first data Data1, the second data Data2, and the third data Data3 are sequentially written, the RAID parity RP may be repeatedly calculated and repeatedly stored in the persistent memory region (e.g., the d-th persistent memory region 15d). In this case, since the RAID parity RP is repeatedly stored in the persistent memory region, not the nonvolatile memory device, an overwrite operation with respect to the RAID parity RP may not be performed. Therefore, the lifespan of the nonvolatile memory device may be improved.

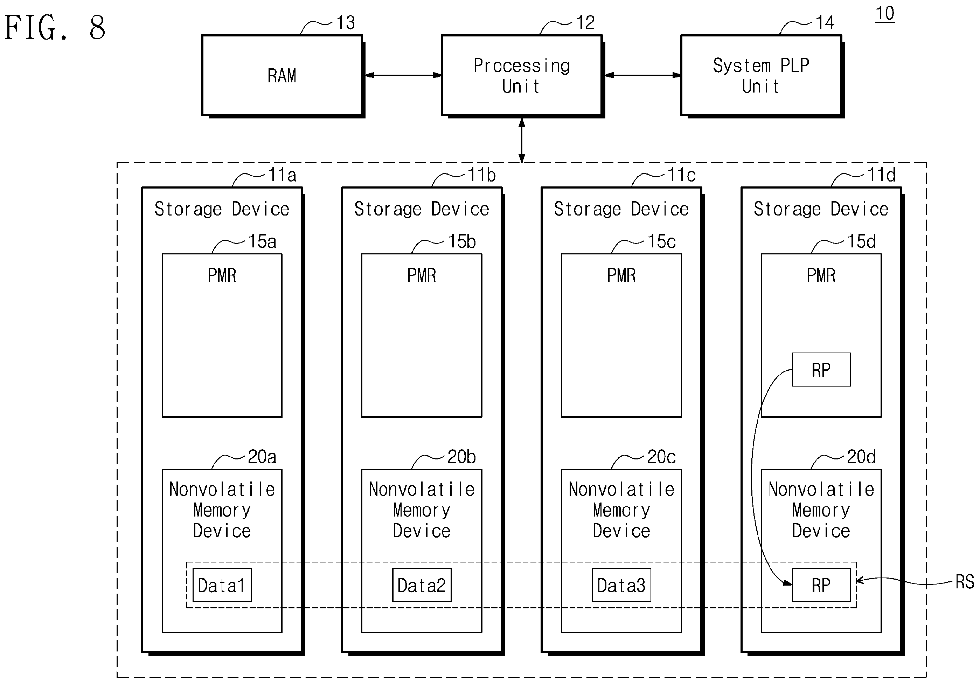

FIG. 8 is a block diagram illustrating how the electronic device 10 according to an embodiment of the present disclosure completes data writing into a plurality of storage devices. Referring to FIGS. 1, 2, 3, 7, and 8, the electronic device 10 may be able to complete a RAID write operation with respect to write data requested from the processing unit 12.

After the first data Data1, the second data Data2, and the third data Data3 included in the write data requested from the processing unit 12 are sequentially written into the a-th nonvolatile memory device 20a of the a-th storage device 11a, the b-th nonvolatile memory device 20b of the b-th storage device 11b, and the c-th nonvolatile memory device 20c of the c-th storage device 11c, and the final RAID parity RP is stored in the d-th persistent memory region 15d of the d-th storage device 11d, the electronic device 10 may copy the final RAID parity RP into the d-th nonvolatile memory device 20d.

For example, when the data write operation described with reference to FIG. 7 is completed, the memory controller 100 may copy the final RAID parity RP stored in the persistent memory region into the nonvolatile memory device. For example, when the data write operation described with reference to FIG. 7 is completed, the memory controller 100 of the d-th storage device 11d may copy the final RAID parity RP stored in the d-th persistent memory region 15d into the d-th nonvolatile memory device 20d.

In this case, the region in which the first data Data1 is written in the a-th nonvolatile memory device 20a, the region in which the second data Data2 is written in the b-th nonvolatile memory device 20b, the region in which the third data Data3 is written in the c-th nonvolatile memory device 20c, and the region in which the final RAID parity RP is stored in the d-th nonvolatile memory device 20d may be defined as the RAID stripe RS.

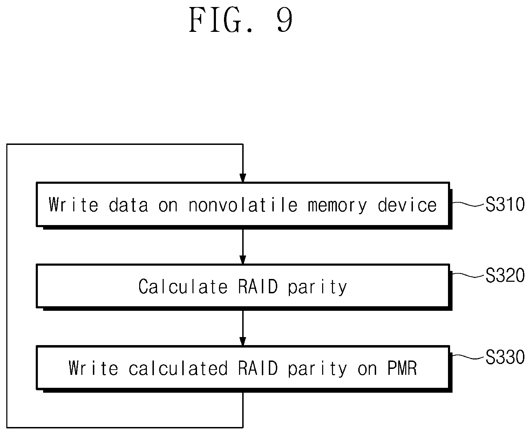

FIG. 9 is a flowchart illustrating how the electronic device 10 according to an embodiment of the present disclosure writes data into a plurality of storage devices. Referring to FIGS. 1, 2, 3, 7, and 9, in operation S310, the electronic device 10 may write data to a nonvolatile memory device. For example, the memory controller 100 of one of the plurality of storage devices 11a, 11b, and 11c of the electronic device 10 may write at least a portion of the write data requested from the processing unit 12 into the nonvolatile memory device 20a, 20b, or 20c.

In operation S320, the electronic device 10 may calculate the RAID parity RP. For example, the processing unit 12 of the electronic device 10 or the memory controller 100 of the d-th storage device 11d may calculate the RAID parity RP based on at least a portion of the write data written to the nonvolatile memory device 20a, 20b, or 20c.

In operation S330, the electronic device 10 may write the calculated RAID parity RP into the persistent memory region. For example, the processing unit 12 of the electronic device 10 or the memory controller 100 of the d-th storage device 11d may store the calculated RAID parity RP in the d-th persistent memory region 15d of the d-th storage device 11d.

Thereafter, the electronic device 10 may return to operation S310 and may repeat the aforementioned operations with respect to the remaining portion of the write data requested from the processing unit 12. For example, the electronic device 10 may sequentially perform the aforementioned operation S310 on each portion of the write data requested from the processing unit 12, with respect to different storage devices among the plurality of storage devices 11a, 11b, and 11c. For example, the electronic device 10 may store the RAID parity RP in the d-th storage device 11d in which the write data requested from the processing unit 12 is not written.

When the electronic device 10 completes the operations described above with reference to FIGS. 7 and 9 with respect to all of the write data requested from the processing unit 12, the electronic device 10 may end operation illustrated in FIG. 9.

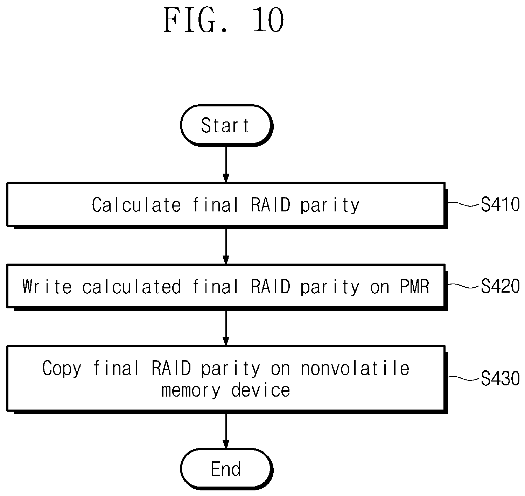

FIG. 10 is a flowchart, by way of example, illustrating how the electronic device 10, according to an embodiment of the present disclosure, completes data writing into a plurality of storage devices. Referring to FIGS. 1, 2, 3, 7, 8, 9, and 10, in operation S410, the electronic device 10 may calculate the final RAID parity RP. In operation S420, the electronic device 10 may write the calculated final RAID parity RP into the persistent memory region. For example, the processing unit 12 of the electronic device 10 or the memory controller 100 of the d-th storage device 11d may calculate the final RAID parity RP based on the write data written in the other plurality of storage devices 11a, 11b, and 11c.

For example, operations S410 and S420 may correspond to operations S320 and S330 with respect to the last part of the write data requested from the processing unit 12 in FIG. 9.

In operation S430, the electronic device 10 may copy the final RAID parity RP into the nonvolatile memory device. For example, the processing unit 12 of the electronic device 10 or the memory controller 100 of the d-th storage device 11d may copy the final RAID parity RP for which no further overwrite operation is necessary into the corresponding d-th nonvolatile memory device 20d as all of the write data requested from the processing unit 12 are written into the plurality of storage devices 11a, 11b, and 11c.

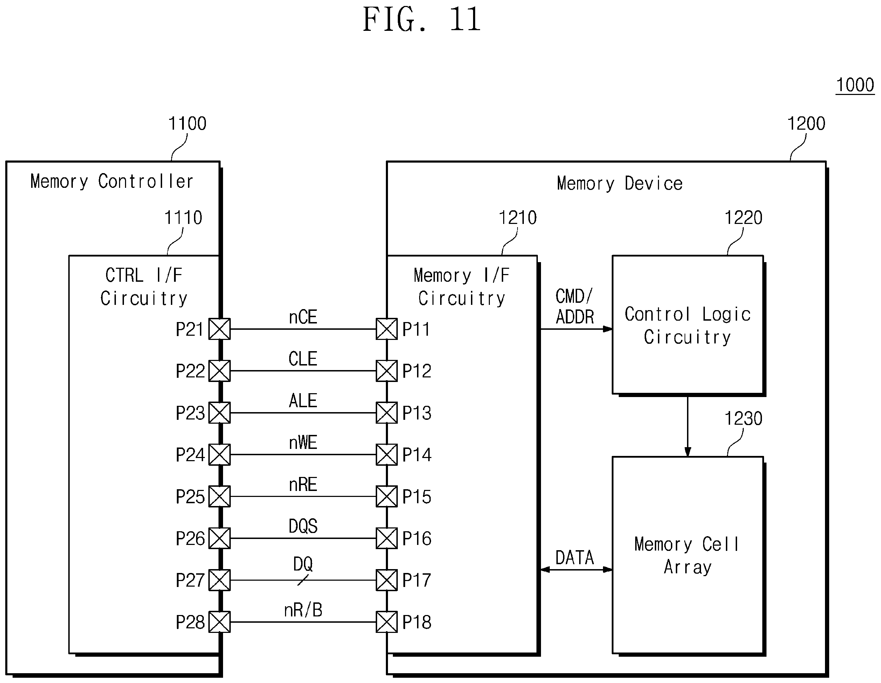

FIG. 11 is a block diagram illustrating a memory system according to an embodiment of the present disclosure. Referring to FIG. 11, the memory system 1000 may include a memory device 1200 and a memory controller 1100.

The memory device 1200 may include first to eighth pins P11 to P18, a memory interface circuitry 1210, a control logic circuitry 1220, and a memory cell array 1230.

The memory interface circuitry 1210 may receive a chip enable signal nCE from the memory controller 1100 through the first pin P11. The memory interface circuitry 1210 may transmit and receive signals to and from the memory controller 1100 through the second to eighth pins P12 to P18 in response to the chip enable signal nCE. For example, when the chip enable signal nCE is in an enable state (e.g., a low level), the memory interface circuitry 1210 may transmit and receive signals to and from the memory controller 1100 through the second to eighth pins P12 to P18.

The memory interface circuitry 1210 may receive a command latch enable signal CLE, an address latch enable signal ALE, and a write enable signal nWE from the memory controller 1100 through the second to fourth pins P12 to P14. The memory interface circuitry 1210 may receive a data signal DQ from the memory controller 1100 through the seventh pin P17 or transmit the data signal DQ to the memory controller 1100. A command CMD, an address ADDR, and data may be transmitted via the data signal DQ. For example, the data signal DQ may be transmitted through a plurality of data signal lines. In this case, the seventh pin P17 may include a plurality of pins respectively corresponding to a plurality of data signals DQ(s).

The memory interface circuitry 1210 may obtain the command CMD from the data signal DQ, which is received in an enable section (e.g., a high-level state) of the command latch enable signal CLE based on toggle time points of the write enable signal nWE. The memory interface circuitry 1210 may obtain the address ADDR from the data signal DQ, which is received in an enable section (e.g., a high-level state) of the address latch enable signal ALE based on the toggle time points of the write enable signal nWE.

In an example embodiment, the write enable signal nWE may be maintained at a static state (e.g., a high level or a low level) and toggle between the high level and the low level. For example, the write enable signal nWE may toggle in a section in which the command CMD or the address ADDR is transmitted. Thus, the memory interface circuitry 1210 may obtain the command CMD or the address ADDR based on toggle time points of the write enable signal nWE.

The memory interface circuitry 1210 may receive a read enable signal nRE from the memory controller 1100 through the fifth pin P15. The memory interface circuitry 1210 may receive a data strobe signal DQS from the memory controller 1100 through the sixth pin P16 or transmit the data strobe signal DQS to the memory controller 1100.

In a data (DATA) output operation of the memory device 1200, the memory interface circuitry 1210 may receive the read enable signal nRE, which toggles through the fifth pin P15, before outputting the data DATA. The memory interface circuitry 1210 may generate the data strobe signal DQS, which toggles based on the toggling of the read enable signal nRE. For example, the memory interface circuitry 1210 may generate a data strobe signal DQS, which starts toggling after a predetermined delay (e.g., tDQSRE), based on a toggling start time of the read enable signal nRE. The memory interface circuitry 1210 may transmit the data signal DQ including the data DATA based on a toggle time point of the data strobe signal DQS. Thus, the data DATA may be aligned with the toggle time point of the data strobe signal DQS and transmitted to the memory controller 1100.

In a data (DATA) input operation of the memory device 1200, when the data signal DQ including the data DATA is received from the memory controller 1100, the memory interface circuitry 1210 may receive the data strobe signal DQS, which toggles, along with the data DATA from the memory controller 1100. The memory interface circuitry 1210 may obtain the data DATA from the data signal DQ based on toggle time points of the data strobe signal DQS. For example, the memory interface circuitry 1210 may sample the data signal DQ at rising and falling edges of the data strobe signal DQS and obtain the data DATA.

The memory interface circuitry 1210 may transmit a ready/busy output signal nR/B to the memory controller 1100 through the eighth pin P18. The memory interface circuitry 1210 may transmit state information of the memory device 1200 through the ready/busy output signal nR/B to the memory controller 1100. When the memory device 1200 is in a busy state (i.e., when operations are being performed in the memory device 1200), the memory interface circuitry 1210 may transmit a ready/busy output signal nR/B indicating the busy state to the memory controller 1100. When the memory device 1200 is in a ready state (i.e., when operations are not performed or completed in the memory device 1200), the memory interface circuitry 1210 may transmit a ready/busy output signal nR/B indicating the ready state to the memory controller 1100. For example, while the memory device 1200 is reading data DATA from the memory cell array 1230 in response to a page read command, the memory interface circuitry 1210 may transmit a ready/busy output signal nR/B indicating a busy state (e.g., a low level) to the memory controller 1100. For example, while the memory device 1200 is programming data DATA to the memory cell array 1230 in response to a program command, the memory interface circuitry 1210 may transmit a ready/busy output signal nR/B indicating the busy state to the memory controller 1100.

The control logic circuitry 1220 may control all operations of the memory device 1200. The control logic circuitry 1220 may receive the command/address CMD/ADDR obtained from the memory interface circuitry 1210. The control logic circuitry 1220 may generate control signals for controlling other components of the memory device 1200 in response to the received command/address CMD/ADDR. For example, the control logic circuitry 1220 may generate various control signals for programming data DATA to the memory cell array 1230 or reading the data DATA from the memory cell array 1230.

The memory cell array 1230 may store the data DATA obtained from the memory interface circuitry 1210, via the control of the control logic circuitry 1220. The memory cell array 1230 may output the stored data DATA to the memory interface circuitry 1210 via the control of the control logic circuitry 1220.

The memory cell array 1230 may include a plurality of memory cells. For example, the plurality of memory cells may be flash memory cells. However, the inventive concept is not limited thereto, and the memory cells may be RRAM cells, FRAM cells, PRAM cells, thyristor RAM (TRAM) cells, or MRAM cells. Hereinafter, an embodiment in which the memory cells are NAND flash memory cells will mainly be described.

The memory controller 1100 may include first to eighth pins P21 to P28 and a controller interface circuitry 1110. The first to eighth pins P21 to P28 may respectively correspond to the first to eighth pins P11 to P18 of the memory device 1200.

The controller interface circuitry 1110 may transmit a chip enable signal nCE to the memory device 1200 through the first pin P21. The controller interface circuitry 1110 may transmit and receive signals to and from the memory device 1200, which is selected by the chip enable signal nCE, through the second to eighth pins P22 to P28.

The controller interface circuitry 1110 may transmit the command latch enable signal CLE, the address latch enable signal ALE, and the write enable signal nWE to the memory device 1200 through the second to fourth pins P22 to P24. The controller interface circuitry 1110 may transmit or receive the data signal DQ to and from the memory device 1200 through the seventh pin P27.

The controller interface circuitry 1110 may transmit the data signal DQ including the command CMD or the address ADDR to the memory device 1200 along with the write enable signal nWE, which toggles. The controller interface circuitry 1110 may transmit the data signal DQ including the command CMD to the memory device 1200 by transmitting a command latch enable signal CLE having an enable state. Also, the controller interface circuitry 1110 may transmit the data signal DQ including the address ADDR to the memory device 1200 by transmitting an address latch enable signal ALE having an enable state.

The controller interface circuitry 1110 may transmit the read enable signal nRE to the memory device 1200 through the fifth pin P25. The controller interface circuitry 1110 may receive or transmit the data strobe signal DQS from or to the memory device 1200 through the sixth pin P26.

In a data (DATA) output operation of the memory device 1200, the controller interface circuitry 1110 may generate a read enable signal nRE, which toggles, and transmit the read enable signal nRE to the memory device 1200. For example, before outputting data DATA, the controller interface circuitry 1110 may generate a read enable signal nRE, which is changed from a static state (e.g., a high level or a low level) to a toggling state. Thus, the memory device 1200 may generate a data strobe signal DQS, which toggles, based on the read enable signal nRE. The controller interface circuitry 1110 may receive the data signal DQ including the data DATA along with the data strobe signal DQS, which toggles, from the memory device 1200. The controller interface circuitry 1110 may obtain the data DATA from the data signal DQ based on a toggle time point of the data strobe signal DQS.

In a data (DATA) input operation of the memory device 1200, the controller interface circuitry 1110 may generate a data strobe signal DQS, which toggles. For example, before transmitting data DATA, the controller interface circuitry 1110 may generate a data strobe signal DQS, which is changed from a static state (e.g., a high level or a low level) to a toggling state. The controller interface circuitry 1110 may transmit the data signal DQ including the data DATA to the memory device 1200 based on toggle time points of the data strobe signal DQS.

The controller interface circuitry 1110 may receive a ready/busy output signal nR/B from the memory device 1200 through the eighth pin P28. The controller interface circuitry 1110 may determine state information of the memory device 1200 based on the ready/busy output signal nR/B.

In an embodiment, the memory device 1200 may be a nonvolatile memory device 20a, 20b, 20c, 20d, or 200 described with reference to FIGS. 1 to 10. In an embodiment, the memory controller 1100 may be the memory controller 100 described with reference to FIGS. 1 to 10. The memory controller 1100 includes a volatile memory, and the persistent memory region may be assigned in the volatile memory. The persistent memory region may be assigned based on the methods described with reference to FIGS. 1 to 10.

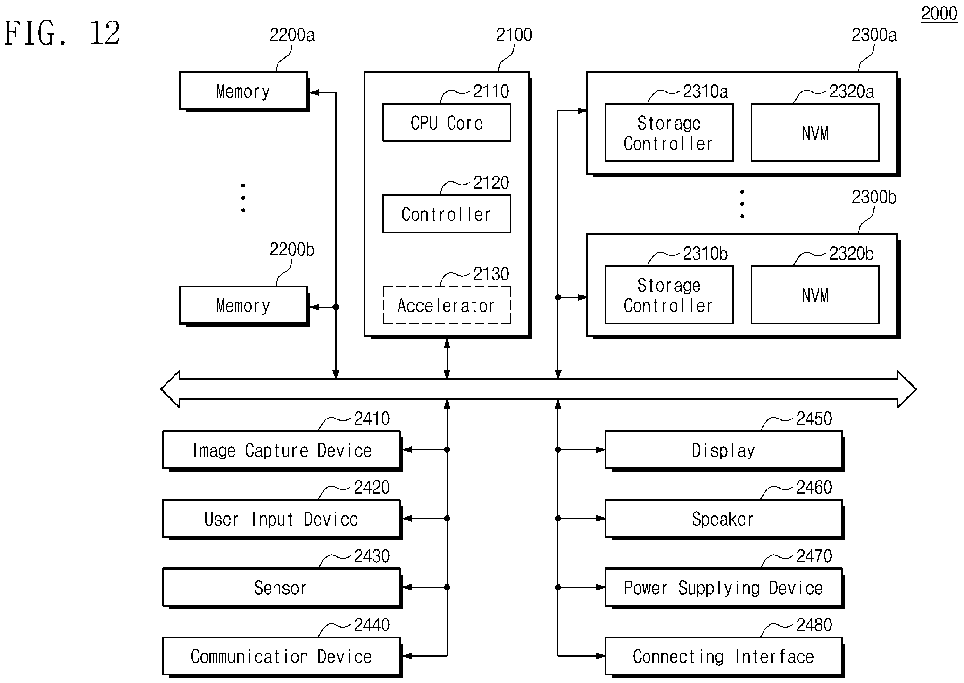

FIG. 12 is a diagram illustrating a system to which a storage device according to an embodiment of the present disclosure is applied. The system 2000 of FIG. 12 may basically be a mobile system, such as a portable communication terminal (e.g., a mobile phone), a smartphone, a tablet personal computer (PC), a wearable device, a healthcare device, or an Internet of things (IOT) device. However, the system 2000 of FIG. 12 is not necessarily limited to the mobile system and may be a PC, a laptop computer, a server, a media player, or an automotive device (e.g., a navigation device).

Referring to FIG. 12, the system 2000 may include a main processor 200, memories (e.g., 2200a and 2200b), and storage devices (e.g., 2300a and 2300b). In addition, the system 2000 may include at least one of an image capturing device 2410, a user input device 2420, a sensor 2430, a communication device 2440, a display 2450, a speaker 2460, a power supplying device 2470, and a connecting interface 2480.

The main processor 2100 may control all operations of the system 2000, more specifically, operations of other components included in the system 2000. The main processor 2100 may be implemented as a general-purpose processor, a dedicated processor, or an application processor.

The main processor 2100 may include at least one CPU core 2110 and further include a controller 2120 configured to control the memories 2200a and 2200b and/or the storage devices 2300a and 2300b. In some embodiments, the main processor 2100 may further include an accelerator 2130, which is a dedicated circuit for a high-speed data operation, such as an artificial intelligence (AI) data operation. The accelerator 2130 may include a graphics processing unit (GPU), a neural processing unit (NPU) and/or a data processing unit (DPU) and be implemented as a chip that is physically separate from the other components of the main processor 2100.

The memories 2200a and 2200b may be used as main memory devices of the system 1000. Although each of the memories 2200a and 2200b may include a volatile memory, such as static random access memory (SRAM) and/or dynamic RAM (DRAM), each of the memories 2200a and 2200b may include non-volatile memory, such as a flash memory, phase-change RAM (PRAM) and/or resistive RAM (RRAM). The memories 2200a and 2200b may be implemented in the same package as the main processor 2100.

The storage devices 2300a and 2300b may serve as non-volatile storage devices configured to store data regardless of whether power is supplied thereto, and have larger storage capacity than the memories 2200a and 2200b. The storage devices 2300a and 2300b may respectively include storage controllers(STRG CTRL) 2310a and 2310b and NVM(Non-Volatile Memory)s 2320a and 2320b configured to store data via the control of the storage controllers 2310a and 2310b. Although the NVMs 2320a and 2320b may include flash memories having a two-dimensional (2D) structure or a three-dimensional (3D) V-NAND structure, the NVMs 2320a and 2320b may include other types of NVMs, such as PRAM and/or RRAM.

The storage devices 2300a and 2300b may be physically separated from the main processor 2100 and included in the system 2000 or implemented in the same package as the main processor 2100. In addition, the storage devices 2300a and 2300b may have types of solid-state devices (SSDs) or memory cards and be removably combined with other components of the system 2000 through an interface, such as the connecting interface 2480 that will be described below. The storage devices 2300a and 2300b may be devices to which a standard protocol, such as a universal flash storage (UFS), an embedded multi-media card (eMMC), or a non-volatile memory express (NVMe), is applied, without being limited thereto.

The image capturing device 2410 may capture still images or moving images. The image capturing device 2410 may include a camera, a camcorder, and/or a webcam.

The user input device 2420 may receive various types of data input by a user of the system 2000 and include a touch pad, a keypad, a keyboard, a mouse, and/or a microphone.

The sensor 2430 may detect various types of physical quantities, which may be obtained from the outside of the system 2000, and convert the detected physical quantities into electric signals. The sensor 2430 may include a temperature sensor, a pressure sensor, an illuminance sensor, a position sensor, an acceleration sensor, a biosensor, and/or a gyroscope sensor.

The communication device 2440 may transmit and receive signals between other devices outside the system 2000 according to various communication protocols. The communication device 2440 may include an antenna, a transceiver, and/or a modem.

The display 2450 and the speaker 2460 may serve as output devices configured to respectively output visual information and auditory information to the user of the system 2000.

The power supplying device 2470 may appropriately convert power supplied from a battery (not shown) embedded in the system 2000 and/or an external power source, and supply the converted power to each of components of the system 2000.

The connecting interface 2480 may provide connection between the system 2000 and an external device, which is connected to the system 2000 and capable of transmitting and receiving data to and from the system 2000. The connecting interface 2480 may be implemented by using various interface schemes, such as advanced technology attachment (ATA), serial ATA (SATA), external SATA (e-SATA), small computer small interface (SCSI), serial attached SCSI (SAS), peripheral component interconnection (PCI), PCI express (PCIe), NVMe, IEEE 1394, a universal serial bus (USB) interface, a secure digital (SD) card interface, a multi-media card (MMC) interface, an eMMC interface, a UFS interface, an embedded UFS (eUFS) interface, and a compact flash (CF) card interface.

In an embodiment, the storage devices 2300a or 2300b of FIG. 12 may be the storage device 11a, 11b, 11c, 11d, or 11 described with reference to FIGS. 1 to 10. In addition, in an embodiment, the main processor 2100 of FIG. 12 may be the processing unit 12 described with reference to FIGS. 1 to 10.

According to an embodiment of the present disclosure, the electronic device including the plurality of storage devices includes a high-capacity system power loss protection unit, and thus the electronic device and the operating method thereof are provided that assign an increased persistent memory region to each of the plurality of storage devices based on the high-capacity system power loss protection unit.

In addition, based on the plurality of storage devices to which the increased persistent memory region is assigned, the electronic device provides improved data reliability.

The above descriptions are detail embodiments for carrying out the present disclosure. Embodiments in which a design is simply changed or which are easily changed may be included in the present disclosure as well as an embodiment described above. In addition, technologies that are easily changed and implemented by using the above embodiments may be included in the present disclosure. Therefore, the scope of the present disclosure should not be limited to the above-described embodiments and should be defined by not only the claims to be described later, but also those equivalent to the claims of the present disclosure.

## Claims

1. A storage system comprising:
a random access memory;
a system power loss protection unit;
a plurality of storage devices; and
a processing unit configured to control the random access memory, the system power loss protection unit, and the plurality of storage devices, and
wherein each of the plurality of storage devices is configured to assign a persistent memory region (PMR) based on a capacity of the system power loss protection unit.

2. The storage system of claim 1, wherein the system power loss protection unit includes at least one power loss protection capacitor,
wherein the capacity corresponds to a capacitance of the at least one power loss protection capacitor, and
wherein the system power loss protection unit is configured to provide power corresponding to the capacity to the plurality of storage devices when a power loss occurs.

3. The storage system of claim 1, wherein the processing unit is further configured to monitor the capacity and transfer the monitored capacity to each of the plurality of storage devices.

4. The storage system of claim 3, wherein each of the plurality of storage devices includes a memory controller and a nonvolatile memory device,
wherein the memory controller includes a volatile memory, and
wherein each of the plurality of storage devices is configured to assign the persistent memory region to at least a portion of the volatile memory based on the capacity.

5. The storage system of claim 4, wherein each of the plurality of storage devices is further configured to assign the persistent memory region to have a size corresponding to a size of data that can be flushed from the persistent memory region to the nonvolatile memory device based on power corresponding to the capacity when a power loss occurs.

6. The storage system of claim 4, wherein when the capacity is variable, each of the plurality of storage devices is further configured to variably assign the persistent memory region.

7. The storage system of claim 6, wherein when the capacity is variable, the processing unit is further configured to detect that the capacity is changed, and transfer the changed capacity to each of the plurality of storage devices.

8. The storage system of claim 7, wherein each of the plurality of storage devices is further configured to reassign the persistent memory region based on the changed capacity.

9. A method of operating a storage system including a system power loss protection unit, the method comprising:
monitoring a capacity of the system power loss protection unit;
transferring the monitored capacity to each of a plurality of storage devices; and
assigning a persistent memory region to each of the plurality of storage devices based on the received capacity.

10. The method of claim 9, wherein the system power loss protection unit includes at least one power loss protection capacitor, and
wherein the monitoring of the capacity includes monitoring a capacitance of the power loss protection capacitor.

11. The method of claim 9, wherein the system power loss protection unit is configured to provide power corresponding to the capacity to the plurality of storage devices when a power loss occurs in the storage system.

12. The method of claim 9, wherein each of the plurality of storage devices includes a memory controller and a nonvolatile memory device,
wherein the memory controller includes a volatile memory, and
wherein the assigning of the persistent memory region to each of the plurality of storage devices includes assigning the persistent memory region to at least a portion of the volatile memory based on the capacity.

13. The method of claim 12, wherein the assigning of the persistent memory region to each of the plurality of storage devices further includes assigning the persistent memory region to have a size corresponding to a size of data that can be flushed from the persistent memory region to the nonvolatile memory device based on power corresponding to the capacity when a power loss occurs in the storage system.

14. The method of claim 12, wherein when the capacity is variable, the assigning of the persistent memory region to each of the plurality of storage devices further includes variably assigning the persistent memory region.

15. The method of claim 14, further comprising:
when the capacity is variable,
detecting that the capacity is changed; and
transferring the changed capacity to each of the plurality of storage devices.
